# FASCICULE DE BREVET EUROPEEN

(11) **EP 0 315 556 B1**
(45) Date de publication et mention de la délivrance du brevet: **24.03.1993**
(21) Numéro de dépôt: 88460021.4
(22) Date de dépôt: 04.10.1988
(51) Int. Cl.: F24J 2/40, F28D 20/00, A01G 9/24

(54) **Procédé et dispositif de climatisation de chauffage, de régulation et traitement hygrothermique des constructions, construction résultant de leur mise en oeuvre et procédé de réalisation de leurs fondations**
Verfahren und Vorrichtung zur Lüftung, Heizung, Regulierung und Klimatisierung von Gebäuden, Gebäude zu deren Durchführung und Verfahren zur Ausführung ihrer Fundamente
Process and device for the ventilation heating, regulation and air conditionning of buildings, building making use thereof and process for laying their foundations

(30) Priorité: 06.10.1987 FR 8713945
(43) Date de publication de la demande: 10.05.1989
(73) Titulaire: Helary, Dominique, F-22120 Yffiniac (FR)
(72) Inventeur: Helary, Dominique, F-22120 Yffiniac (FR)

(56) Documents cités:
- EP-A- 0 173 662
- DE-A- 3 117 953
- DE-A- 3 327 896
- FR-A- 2 408 866
- FR-A- 2 414 699
- FR-A- 2 435 007
- FR-A- 2 444 234
- FR-A- 2 535 071
- GB-A- 2 182 076
- US-A- 3 952 947
- US-A- 3 952 947
- US-A- 4 215 672
- US-A- 4 279 240
- US-A- 4 552 205
- US-A- 4 674 561

## Description

La présente invention concerne la climatisation , le chauffage , la régulation et le traitement hygrothermique des constructions.

Elle peut s'appliquer à des salles de sports , des piscines , des usines , des habitations , des serres ou toutes autres constructions déterminant un espace dont on veut controler les températures et ou l'hygrométrie et ou la luminosité.

De nombreux procédés ou dispositifs de chauffage , particuliérement de chauffage solaire ont déja été développés.

Une partie de ces techniques ont été prévues particuliérement pour les serres. La serre est un trés bon capteur solaire.
L'énergie solaire ayant des variations importantes ; différentes méthodes ont été proposées et sont mises en oeuvre pour diminuer l'effet de ces fluctuations qui ont d'autant plus d'amplitude que l'inertie thermique des serres est faible et que le coéfficient de déperdition est fort.

Selon une technique traditionelle , les serres sont peintes en blanc l'été et une ventilation avec prise d'air à l'ombre est organisée dans la journée.

Au contraire en hiver les vitrages sont nettoyés afin de laisser passer un maximum de lumiére , et les serres sont chauffées.

En plus du probléme de variation des températures il faut maintenir le degré hygrométrique dans une fourchette définie en fonction de l'activité ou de la culture ; et il est parfois nécessaire de chauffer même en été pendant la nuit pour éviter que la baisse de température entraine une augmentation du degré hygrométrique.

Plus récemment certaines serre ont été équipées à leur partie supérieure de films ou de filets réfléchissants intérieurs amovibles.
Lorsque l'ensoleillement est fort ; un filet dont les mailles sont en partie obturées par des pastilles métalliques , est déroulé ; il réfléchit une partie des rayonnements sans s'opposer à la ventilation ; au contraire la nuit un film étanche et réflecteur limite la déperdition par rayonnement.

Il a également été envisagé de récupérer les excédents thermiques pour les utiliser en période froide.
Les dispositifs proposés se composent d'éléments capteurs à eau situés entre la verriére et le volume utile.
Ces éléments capteurs sont opaques et limitent à proportion de leur surface la quantité de lumiére utile à la croissance des plantes.
L'avantage obtenu lorsque l'ensoleillement est fort devient alors un inconvénient en hiver lorsque les plantes manquent de lumiére.

D'autres techniques ont été développées pour étre appliquées à toutes sortes de batiments :
- capteurs solaires à liquide caloporteur ; Panneaux solaires

Les panneaux solaires constituent des apports thermiques sur des constructions traditionnelles , cet apport peut étre coupé par une vanne aussi ce dispositif ne présente pas de probléme de climatisation et d'apport trop important par contre la montée en température du capteur est longue et correspond au chauffage du liquide caloporteur .
Le stockage de l'énergie captée par un panneau solaire se fait par une cuve isolée contenant le liquide caloporteur.
Ce liquide est en général de l'eau , une cuve de capacité égale à la capacité du volume chauffé ( correspondant presque au doublement du prix de la construction ) conserve au mieux un mois de chauffage .

Il y a eu de nombreuses recherches pour trouver des liquides dont la température de changement d'état est comprise entre 30° et 50° afin d'augmenter la capacité de stockage énergétique pour un méme volume , plusieurs matériaux conviennent mais leurs prix ne sont pas actuellement compatibles avec les données économiques.
- Les capteurs à air dérivés des "Murs Trombe" qui peuvent étre regroupés en 2 catégories
   - les capteurs légers
   - les capteurs lourds
- capteur léger
: L'énergie captée est équivalente à celle des serres à surface et orientation égales ; cet apport peut aussi etre coupé ; il n'y a donc pas de probléme de climatisation.
La restitution peut se faire soit par convection à air chaud soit par rayonnement dans des murs chauffés par l'air chaud.
Le stockage est réalisé par des matériaux enterrés confinés dans une enceinte isolée
Si les séquences d'ensoleillement sont courtes dans un contexte d'hiver ; l'énergie captée est directement distribuée ; l'excédent est stockée dans des enrochements enterrés dans une enceinte isolée puis restitué selon les besoins.
- Capteur lourd ( mur Trombe traditionnel )
nous sommes trés proches des capteurs à eau , mais avec l'avantage d'une possibilité d'utilisation directe et immédiate du flux capté : il faut une période de temps suffisante pour chauffer le mur noir situé derrière un vitrage , les séquences inférieures au temps d'échauffement sont inutilisables.
Une amélioration de ces systémes consiste en l'adjonction d'un film isolant ( et réflecteur des rayonnements infra-rouges lointains emis par le mur ) situé entre le mur de stockage et la verriére pour limiter les pertes du stock .

Dans une serre traditionnelle il fait trés chaud le jour au soleil ce qui produit malgré l'arrosage intensif une baisse du degré hygrométrique en dessous de l'optimum de croissance des plantes.
La nuit la température baisse énormément ce qui produit une saturation hygrométrique dont souffre les plantes avec prolifération de champignons et parasites nécessitant des traitement onéreux.
Il existe des pompes à chaleur qui récupérent la chaleur latente de condensation et ainsi chauffent la nuit en déshydratant et de façon trés performante.

Enfin différentes possibilités de stockage de chaleur plus ou moins intersaisonnier ont été exploitées.
- stockage profond en puits et nappe phréatique
- stockage en surface
   - par galets secs dans une enceinte isolée
   - en bassin excavé de type divisé
   - en terrain remanié
Chacune de ces techniques antérieures apporte une solution à une partie des problémes : chauffage , climatisation , traitement hygrométrique des constructions.
Mais chacune d'elles présente des inconvénients au moins dans certaines conditions de fonctionnement qui ont empéché leur développement.
De plus les installations qui en dérivent sont couteuses et leur fiabilité difficile à obtenir.

On connait par ailleurs :
- U.S. - A,4 279 240 ce procédé est une association de capteur à liquide caloporteur et d'écran d'ombrage ; il comprend
   - un caisson ayant 3 surfaces et deux ensembles de volets
   En partant de l'exterieur , les deux premières surfaces sont translucides et entourent des volets réfléchissants l'énergie réfléchie n'est jamais récupérée
   Un caloporteur circule entre les deuxièmes et troisièmes surfaces les derniers volets intérieurs sont entiérement opaques et isolants.
- D E - A - 3327896
   Ce procédé prévoit une pulvérisation entre deux surfaces en vue de vaporiser un liquide.
   L'air ainsi chargé de vapeur d'eau est ensuite condensé pour obtenir de l'eau désalée , ou utilisé pour humidifier l'air d'un local à climatiser.
- FR - A - 2435007
   L'échangeur décrit dans ce document est destiné à une pompe à chaleur , l'utilisation de l'humidification envisagée vise à augmenter la conduction entre l'échangeur et le sol ; son effet éventuel sur la circulation de la chaleur dans le sol lui méme n'est pas décrite.

Le but de l'invention est la réalisation d'un procédé et d'un dispositif :
- de climatisation
- de chauffage
- de traitement hygrométrique
- de régulation de l'intensité et du spectre lumineux
dont le fonctionnement permet d'exploiter les ressources naturelles ou les ressources liées au fonctionnement ou à l'exploitation ; l'ensoleillement , l'énergie liée à une activité industriel le ou l'énergie liée à l'occupation des lieux par de nombreuses personnes.
Dans des conditions optimales quelles que soient les variations des conditions d'ensoleillement d'exploitation ou d'occupation. La mise en oeuvre de ce procédé est d'un faible cout avec une grande simplicité d'appareillage et donc une grande fiabilité.

A cet effet il est proposé un procédé de climatisation , de chauffage , de régulation et traitement hygrothermique de constructions , ayant une première surface exterieure et une seconde surface intérieure délimitant un volume intérieur utile dans lequel ;
- on capte l'énergie solaire au travers d'une premiére surface ;
- on filtre selectivement et de maniére variable les radiations ayant traversé la premiere surface par une deuxiéme surface
- on stocke l'énergie solaire ayant traversé la premiere surface et non transmise par la seconde surface
- on régule une circulation d'air entre la premiere et la seconde surface et une unité de stockage , et la filtration selective de la deuxiéme surface en fonction de parametres représentatifs des conditions à l'interieur du volume utile

Selon l'invention :
- l'on pulvérise de l'eau entre la premiére et la seconde surface pour produire des échanges thermiques par changement d'état de l'eau pulverisée .
- l'eau pulvérisée entre la premiére et la deuxième surface est au moins partiellement vaporisée entre ces surfaces et qu'elle est condensée dans l'unité de stockage .

L'invention concerne également un dispositif de climatisation , de chauffage , de régulation et traitement hygrométrique de construction délimitant un volume interieur utile comportant :
- une 1° surface ( 12) en partie périphérique de la construction assurant le libre passage de l'énergie solaire
- une 2° surface (13) filtrant et ou modifiant selectivement et d'une maniére variable les radiations,
- des conduits (3) assurant la circulation de l'air entre le volume compris entre les 2 surfaces , le volume utile (10) et les drains (5)
- des sondes (15) de températures physiques et résultantes , des sondes de rayonnement , des sondes d'hygrométrie

Selon l'invention il comporte également :
- des brumisateurs ( 19 ) pulvérisant l'eau entre la premiére et la deuxiéme surface et produisant des échanges thermiques par changement d'état de l'eau pulvérisée et ,
- des vannes ( 17 )
- que l'unité de stockage (2) comporte un volume de sol naturel ( 4 ) au sein duquel sont placés des drains ( 5 ) destinés à réaliser des échanges thermiques entre l'air qui y circule et le sol par condensation de l'eau contenue dans l'air et passage des condensats dans le sol,
- un circulateur d'air mécanique (18) permettant de controler la circulation d'air et l'hygrométrie
- une unité de programmation (16) et de régulation commandant les vannes (17) , et ou la ventilation mecanique (18) et ou la 2° surface (13) en fonction des valeurs fournies par les sondes (15)

Dans un mode de réalisation préféré : l'unité de stockage comporte un volume de sol naturel en place au sein duquel sont placés des drains destinés à réaliser un échange thermique entre l'air qui y circule et le sol.

L'invention est décrite plus en détail en référence aux dessins dans lesquels
- la figure 1 est un schéma de fonctionnement de l'invention
- la figure 2 représente une construction selon l'invention
- la figure 3 représente une coupe AA
- la figure 4 représente une coupe BB

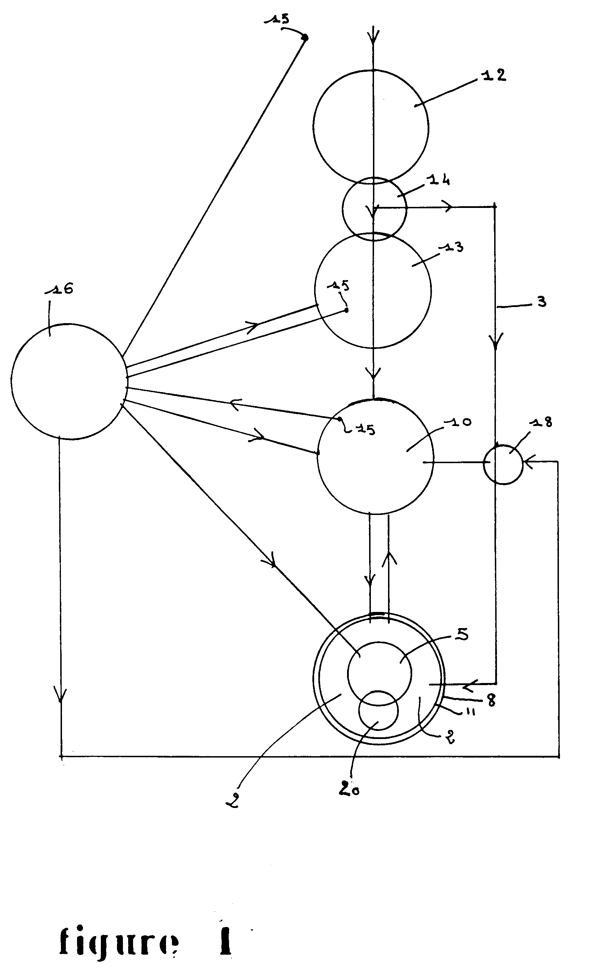

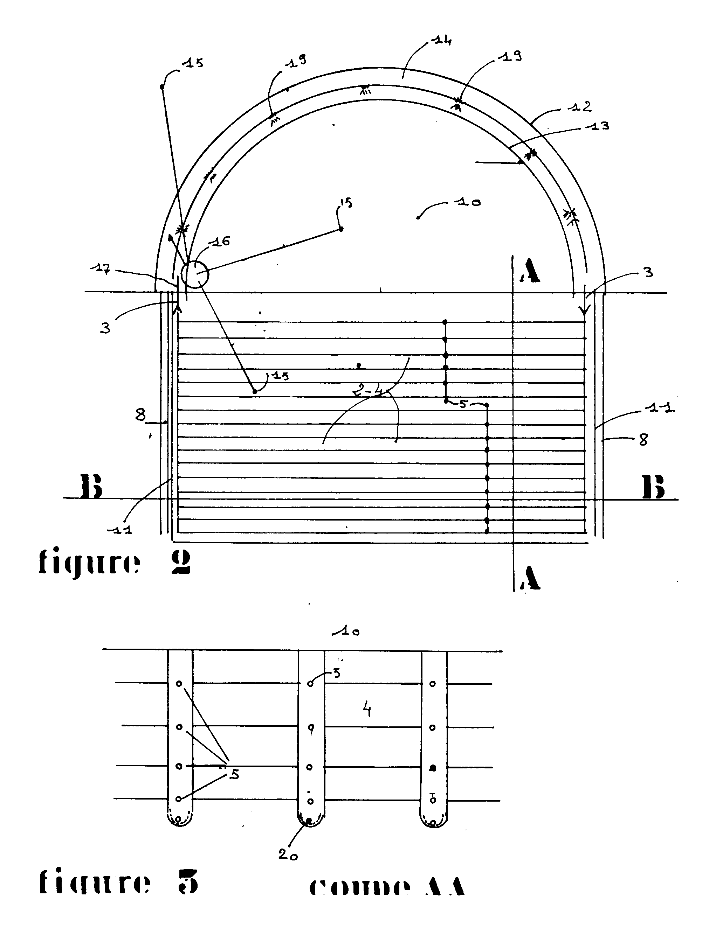

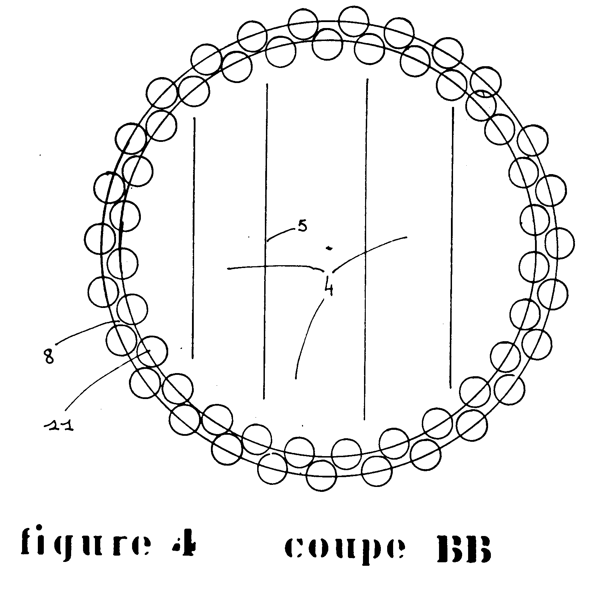

Selon le procédé de climatisation de chauffage de régulation et de traitement hygrothermique de l'invention l'énergie solaire est captée et filtrée avant d'atteindre le volume utile de la construction .

La captation , la filtration la modification spectrale sont réalisées par 2 surfaces ( pouvant étre composées de différents éléments ) délimitant une enceinte.

Dans la période d'ensoleillement l'air de cette enceinte est chauffée.

On réalise éventuellement un stockage de l'énergie.

La répartition de la chaleur et de l'humidité entre l'enceinte , l'unité de stockage et le volume utile est réalisée par une circulation d'air .

Celle ci est commandée par une régulation .

L'unité de stockage est constituée de drains placés dans la terre.

La première surface , externe , constitue la périphérie de la construction et la deuxième surface délimite le volume utile ; elle peut étre ouverte ou fermée selon l'apport et la déperdition thermique ; elle est constituée de velums ou de tous autres matériaux ayant les caractéristiques physiques souhaitées.

Les propriétés peuvent étre obtenues avec une surface simple ou au contraire avec une surface composite éventuellement formée de plusieurs velums superposés.

Le fonctionnement du procédé est le suivant :
- cas N°1 : séquence de soleil avec rayonnement positif mais inférieur à la déperdition :
   les velums s'ouvrent; nous avons un apport solaire direct.
- cas N°2 : séquence de soleil avec rayonnement positif et supérieur à la déperdition :
   un velum translucide se ferme pour limiter le rayonnement à la valeur de la déperdition ( sauf si dans le programme nous avons accepté une surélévation admissible de la température pour maintenir un niveau lumimeux trés élévé , le systéme de régulation définit la hiérachisation entre le stockage énergétique et le niveau lumineux , il peut méme admettre des options différentes dans le temps par exemple pour un gymnase période de non utilisation , periode d'entrainement ou période de compétition );
nous avons alors une accumulation thermique entre le velum et la serre ( volume compris entre le 1° et la 2° surface).
La ventilation mécanique envoie cet air chaud dans les drains en sol.

L'unité de stockage étant plus froide que l'air ,il s'y condense le sol s'échauffe du fait je la température cédée par l'air et du fait de la chaleur latente de changement d'état.

Cas N°3 rayonnement négatif , déperdition thermique importante ce cas se divise en 2 sous possibilités
- le stockage énergétique en col est très important , un velum translucide diminuant peu le niveau lumineux viendra protéger le batiment ,le sol chaud viendra rayonner et chauffer la serre ou le gymnase , pour une habitation , une circulation , d'air ou d'eau , chaude issue du sol viendra réchauffer les refends qui rayonneront sur la surface habitable.
- Les exigences thermiques priment sur les niveaux lumineux , ou en cas d'absence de lumiére naturelle ( la nuit ) l'ensemble des velums vient proteger les parties habitables ou plantées.

Cas N°4 : rayonnement positif et supérieur à l'aborption maximale du systéme de stockage , la température intérieure restant conforme .
ventilation mécanique ; entrée d'air l'ombre et sortie en zone chaude
de la partie habitable pour maintenir la température convenue et du plenum entre velum et serre pour maintenir l'apport à la quantité absorbable sans que le plenum monte à une température telle que son rayonnement rende inacceptable la température résultante de la zone habitable

Cas N°5 : nous sommes situées en zone chaude et la ventilation mécanique méme à partir des zones à l'ombre reste insuffisante nous constatons une élévation de température excessive dans les parties habitables.
nous réservons à plus grande profondeur dans le sol sous le batiment et sous les zones de stockage chaud ; un plan horizontal d'environ 2 m d'épaisseur
la zone entre la verrière et les films est ventilée dans son plan sans communication avec la zone habitable
la zone habitable est ventilée avec une circulation d'air dans les drains du plan prévu à cet effet .

Nous pouvons améliorer le système par la brumisation de l'espace habitable donc vaporisation donc absorption thermique ; l'air circulant dans les drains se refroidit et se condense et redevient à un degré hygrométrique conforme au programme.

Le dispositif de climatisation , de chauffage , de régulation et de traitement hygrométrique des constructions comporte au moins :
- un capteur d'énergie 1
- une unité de stockage 2
- des conduits d'air 3 assurant la distribution de l'air de l'énergie et de l'humidité
- l'unité de stockage 2 comporte un volume de sol 4 au sein duquel sont placés des drains 5 destinés à réaliser les échanges d'énergie entre l'air qui y circule et le sol 4.
Le stockage de l'énergie dans le sol 4 s'est en effet révélé particuliérement efficace à condition de pouvoir controler l'humidité de la terre et d'utiliser des échangeurs efficaces . L'utilisation de drains 5 à l'intérieur desquels circule de l'air chargé d'humidité comme échangeur permet de satisfaire ces conditions

Les propriétés combinées de l'eau et de la terre participent au fonctionnement éfficace des dispositifs de l'invention ; l'eau en changeant éventuellement d'état sert de support à la circulation de l'énergie.

La terre séche est un bon isolant thermique alors que chargée d'eau elle est conductrice ; le controle de l'humidité de la terre au voisinage des drains permet de controler une conduction alors que plus loin la terre séche constitue un isolant et limite les pertes de chaleur stockées
Au droit des drains 5 les condensats 6 humidifient le sol 4 et améliorent ainsi les échanges thermiques , plus on s'éloigne de l'axe des drains 5 plus l'humidité et donc la conduction baisse mais plus le périmètre d'échange augmente.
Il faut impérativement que cette hygrométrie baisse car plus l'argile est séche plus le temps entre l'émission et la restitution augmente et donc plus on aura une restitution l'hiver de l'énergie de l'été.

La définition donnée au mot argile dans l'invention est une définition de granulométrie et non une définition géologique ou chimique ; il s'agit d'un sol de granulométrie faible :0.1 mm en moyenne quelque soit sa composition.

Les condensats 6 sont repris par un rabattement de nappe et un drainage et évacués , leur énergie potentielle peut cependant étre utilisée par une pompe à chaleur pour faire par exemple de l'eau chaude ou du chauffage ponctuel d'appoint.
La présence des condensats 6, est cependant indispensable car en périphérie immédiate des drains 5 elle diminue la résistance thermique et donc augmente la capacite d'absorption thermique du sol 4 par unité de temps , et donc la capacité du sol d'absorber sans élévation de température du local habitable ou de la serre agricole un rayonnement momentanément trés excessif.

Le calcul devra déterminer à chaque fois
- la longueur totale des drains 5 , surface d'échange thermique qui depend de l'humidité de la terre et donc du coéfficient d'échange superficiel et de l'energie maximum à absorber par unité de temps.

Les études faites prouvent que :
- dans une argile (conditions spécifiques à une expérience devant etre vérifiées pour les différents sols rencontrés) de température 10°C à 15 % d'hygrometrie
- si en un point donné nous maintenons une température de 40 °
- il faudra 6 mois pour enregistrer une élévation de température à 2 mètres de notre émetteur

Si nous avons une construction de 30 m par 30 m
avec une coèfficent de déperdition volumétrique G egal à 0.8 W/m3/°C.
avec 900 m2 de verrière zénitale de pente orientée au sud à 30 ° de l'horizontale
avec des drains disposés dans des tranchées à une profondeur maximale de 4 m et minimale de un mètre
les tranchées étant espacées de 4 m et les drains verticalement de 30 cm
Dans les conditions climatiques de Bretagne en période stabilisée ( après la période de montée en température ) garantissent par exemple une température du sol et des refends rayonnant de 24 °
La chaleur stockée est restituée lorsque cela est necessaire pour maintenir l'ambiance voulue dans le volume utile 10 , elle peut etre obtenue soit par la circulation de l'air dans les drains 5 , celui ci étant réchauffé dans le sol 4 et refroidi dans le volume utile 10 , soit directement par rayonnement du sol 4 sous le volume utile.
Le sol étant chauffé en un point la chaleur se propage depuis le point initial jusqu'au point de restitution à une vitesse donnée fonction de la nature du sol et de son hygrométrie , la distance entre le point de stockage et le point de restitution conditionne le temps de déphasage ( revendication 6 )
De maniére préférentiel le le volume de l'unité de stockage 2 est isolée de son environnement 7 par une enceinte de confinement 8.

Une telle disposition permet d'éviter une déperdition thermique latérale liée à un excés d'humidité de la terre à partir de source extérieure .

Pour la méme raison nous avons une récupération des condensats 6.

Pour des utilisations particulières , le dispositif peut étre améliorer par des pompes à chaleur air / air 9 condensant l'excés d'humidité du volume utile 10 et récupérant ainsi la chaleur latente de vaporisation qui peut etre soit diffusé directement dans le volume utile soit stocké dans l'unité de stockage 2.

De meme une pompe air / air 9 entre le volume utile 10 et l'air qui circule dans les drains 5 en sol peut apporter une réponse rapide à une demande thermique donnée.

Ces pompes 9 de complément peuvent ainsi agir , pour chauffer , climatiser , régulariser les échanges hygrothermiques en complément des cycles naturels décrits ci-avant.

L'enceinte de confinement 8 comporte pour fermer ses parois verticales une succession de cylindre 11.
Chaque cylindre est constitué d'une poche étanche remplie d'un mélange d'argile foisonnée , naturellement desséchée puis complémentairement desséchée et stabilisée par de la chaux vive.

Les poches des cylindres 11 peuvent étre constituées à partir d'un film élastomére , polyane ou polyéthyléne ou tout autre produit stable dans le temps et étanche.
L'argile utilisée peut étre celle du terrain , foisonnée , déposée sur une aire de déshydratation puis malaxée avec environ 5 % de chaux vive ; on obtient un matériau isolant thermiquement et stable mécaniquement à l'abri de l'humidité.
Les parois verticales de l'enceinte de confinement 8 sont réalisées par 2 rangs 11 a et 11 b de cylindres décallés les uns par rapport aux autres pour constituer une isolation continue constituée de petits éléments stables lors de la réalisation sans modifier la capacité portante générale du sol en place.

Le dispositif de l'invention comporte un volume d'air situé extérieurement au volume utile 10 et situé entre la premiére surface 12 et la ou les deuxièmes surfaces 13.
La première surface 12 constitue la protection périphérique de la construction
La première surface 12 de ce volume assure la captation de l'énergie.
La ou les deuxièmes surfaces 13 filtrent et ou modifient les valeurs spectrales du rayonnement selectivement et de maniére réglable .
Des conduits 3 assurent la circulation de l'air entre le volume d'air 14 le volume utile 10 et les drains 5.
Des sondes 15 établies suivant les paramétres significatifs de la production ou de l'occupation donnent une information à un automat ( ordinateur programmé ) 16 qui commande :
- des vannes 17
- la deuxième surface 13
- la ventilation mecanique et les circuits d'air 18
- les brumisateurs 19
- la récupération des condensats 6 dans l'unité de stockage 4

L'unité de régulation 16 commande l'ensemble des variables du systéme.

La ou les deuxièmes surfaces 13 du volume utile 10 comporte un ou plusieurs films dont certains étanches à l'air , partiellement réfléchissant à la lumiére susceptibles d'etre ouverts ou fermés filtrant et modifiant la répartition spectrale des radiations et principalement des radiations lumineuses , afin de controler les apports et les déperditions.
Ainsi les propriétes de la ou les 2° surface 13 du volume utile 10 peuvent etre complétement modifiées et controlées en fonction de l'ensoleillement de la déperdition et du programme affecté à la construction.

Les sondes 15 fournissent à l'automat de régulation 16 les valeurs qui permettent d'intervenir par exemple sur :
- la température physique
- la température résultante
- la températive effective
- le rayonnement
- la luminosité
- l'hygrométrie

L'invention concerne aussi la construction en elle meme particuliérement bien adaptée à etre équipée du dispositif de climatisation , de chauffage , de régulation et de traitement hygrothermique .

Les fondations de cette construction peuvent etre partiellement ou totalement constituées de cylindre 11 constitués d'une poche étanche constituée d'argile foisonnée , désséchée et stabilisée à la chaux vive.

Ces fondations sont simples à réaliser , on fore des trous approximativement cylindriques réguliérement répartis sur le pourtour de la construction; chaque trou étant rebouché rn=1avant l'execution d'un trou voisin pour ne pas déstabiliser la résistance mécanique du sol en place.

In fine ces trous sont proches pour constituer une continuité de l'isolation thermique ; cette isolation est améliorée par la réalisation de 2 rangées de trous en quinconce.

## Revendications

1. Procédé de climatisation , de chauffage , de régulation et de traitement hygrothermique de constructions , ayant une premiére surface extérieure et une seconde surface intérieure délimitant un volume intérieur utile dans lequel ,
- on capte l'énergie solaire au travers d'une première surface ,
- on filtre selectivement et de maniére variable les radiations ayant traversé la première surface par une deuxième surface
- on stocke l'énergie solaire ayant traversé la première surface et non transmise par la deuxième surface
- on régule une circulation d'air entre la première et la deuxième surface et une unité de stockage , et la filtration selective de la deuxième surface en fonction de paramétres représentatifs des conditions à l'intérieur du volume utile
caractérisé en ce que :
- l'on pulvérise de l'eau entre la première et la deuxième surface pour produire des échanges thermiques par changement d'état de l'eau pulvérisée .
- l'eau pulvérisée entre la première et la deuxième surface est au moins partiellement vaporisée entre ces surfaces et qu'elle est condensée dans l'unité de stockage .

2. Procédé selon la revendication 1 caractérisé en ce que le stockage de l'énergie est fait dans le sol sous le batiment , à une profondeur telle que le temps nécessaire à sa progression par conduction controlée en vitesse et direction correspond au déphasage temporel entre le moment de stockage et la restitution souhaitée.

3. Procédé selon la revendication 2 caractérisé en ce que la vitesse de progression de l'énergie par conduction , entre le stockage et la restitution est controlée par modification de l'hygrométrie du sol.

4. Dispositif de climatisation , de chauffage , de régulation et traitement hygrométrique de construction délimitant un volume interieur utile comportant
- une première surface ( 12) en partie périphérique de la construction assurant le libre passage de l'énergie solaire
- une deuxième surface (13) délimitant un volume intérieur utile et filtrant et ou modifiant selectivement et d'une maniére variable les radiations ayant traversées la première surface,
- des conduits (3) assurant la circulation de l'air entre le volume compris entre les 2 surfaces , le volume utile (10) et les drains (5)
- des sondes (15) de températures physiques et résultantes , des sondes de rayonnement , des sondes d'hygrométrie
- une unité de stockage de l'énergie (2)
Caractérisé en ce que il comporte
- des brumisateurs ( 19 ) pulvérisant l'eau entre la premiére et la deuxiéme surface et produisant des échanges thermiques par changement d'état de l'eau pulvérisée et ,
- des vannes ( 17 )
- que l'unité de stockage (2) comporte un volume de sol naturel ( 4 ) au sein duquel sont placés des drains ( 5 ) destinés à réaliser des échanges thermiques entre l'air qui y circule et le sol par condensation de l'eau contenue dans l'air et passage des condensats dans le sol.
- un circulateur d'air mécanique (18) permettant de controler la circulation d'air et l'hygrométrie
- une unité de programmation (16) et de régulation commandant les vannes (17) , et ou la ventilation mécanique (18) et ou la deuxième surface (13) en fonction des valeurs fournies par les sondes(15).

5. Dispositif selon la revendication 4 caractérisé en ce que le volume de sol (4) de l'unité de stockage (2) est isolé de son environnement par une enceinte de confinement (8).

6. Dispositif selon l'une quelconque des revendications 4 et 5 caractérisé en ce que l'on stocke l'énergie à une profondeur telle que le temps nécessaire à sa progression par conduction correspond au déphasage temporel entre le moment de stockage et le moment de restitution souhaité.

7. Dispositif selon l'une quelconque des revendications 4 à 6 caractérisé en ce que les parois verticales de l'enceinte de confinement (8) comportent une succession de cylindres (11) verticaux , chaque cylindre étant constitué d'une poche étanche remplie d'un mélange constitué d'argile foisonnée, naturellement désséchée puis complémentairement désséchée et stabilisée par de la chaux vive.

8. Dispositif selon la revendication 7 caractérisé en ce que les parois verticales de l'enceinte de confinement ( 8 ) sont réalisées par une succession de cylindres (II) en quinconce.

9. Dispositif selon la revendication 4 caractérisé en ce que la 2° surface (13) comporte un ou plusieurs films dont certains étanches à l'air et partiellement transparents ou opaques , partiellement réflecteur et ou modifiant la répartition spectrale des rayonnements

## Claims

1. A process for building air conditioning , heating , and hygrothermal treatment and control with a first outside surface and a second inside surface delimiting a useful internal volume within which :
- Solar energy is collected through the first surface ,
- Radiation which passed through the first surface is selectively and variably filtered by a second surface ,
- Store energy , that passed through the first surface and is not transmitted by the second surface is stored ,
- Air circulation between the first and the second surfaces and the storage unit is controlled , and the second surface selectively filtered as a function of parameters representative of conditions inside the useful volume .
Distinguished in that :
- Water is sprayed between the first and second surfaces to produce heat exchanges due to a state change of sprayed water ;
- The water sprayed between the first and second surfaces is at least partially vaporized between these surfaces and is condensed in the storage unit .

2. Process complying with claim 1 , distinguished in that the energy storage is located in the ground under the building at such a depth that the time required for its progression through controled ( direction and speed ) conduction matches the out-of-phase period elapsing from the storage time and the restitution time .

3. Process complying with claims 2 , distinguihed in that the energy conduction progression speed and the out-of-phase period are to be adjusted by modifying the soil moisture content .

4. Building air conditioning , heating , hygrometric control and treatment delimiting a useful internal volume distinguished in that :
- a first surface ( 12 ) partly around the peripheral part of the construction allowing the unhindered passage of solar energy ,
- a second surface ( 13 ) delimiting a useful internal volume selectively and variably filtering and/or modifying radiation , which passed through the first surface .
- Ducts ( 3 ) allowing air circulation between the volume between the 2 surfaces , the useful volume ( 10 ) and drains ( 5 ) ,
- Physical and resulting temperature sensors ( 15 ) , radiation sensors , hygrometric sensors
- an energy storage unit ( 2 )
Distinguished in that it comprises
- Fog machines ( 19 ) atomizing water between the first and second surface and producing heat exchanges by changing the state of the atomized water and ,
- Valves ( 17 )
- a storage unit ( 2 ) consisting of a volume of naturel soil ( 4 ) within which drains ( 5 ) are built , designed to create heat exchanges between the air circulating in them and the floor by condensation of the water contained in the air and the passage of condensates into the soil ,
- a programming and control unit ( 16 ) controlling valves ( 17 ) and/or mechanical ventilation ( 18 ) and/or the second surface ( 13 ) as a function of values output by the sensors ( 15 ) .

5. System complying with claim 4 distinguished in that the volume of ground ( 4 ) of the storage unit ( 2 ) is insulated from its environment by a confinement containment ( 8 )

6. System complying with claim 4 or 5 distinguished in that energy is to be stored at such a depth that , one time required for its progression through conduction matches the out-of-phase period between the time when the energy is stored and the time it has to be restored .

7. System complying with whichever of claims for 4 to 6 distinguished in that the vertical walls of the confinement containment ( 8 ) consist of a series of vertical cylinders ( 11 ) . Each cylinder is composed of a sealed pocket filled with an expanded clay mixture , dried naturally and then further dried and stabilized by quick lime .

8. System complying with claim 7 distinguished in that the vertical walls of the confinement containment ( 8 ) are made up of a series of staggered cylinders ( 11 ) .

9. System according to claim 4 , distinguished in that the second surface ( 13 ) consists of one or several films , some of which are airtight and partially translucid or opaque , partly reflecting or modifying the spectral distribution of the radiation .

## Patentansprüche

1. In dieser Hinsicht wird ein System über Klimatisierung, Heizung, hygrothermische Regelung und Verarbeitung für Bauwerke , dessen erste außere und zweite innere Fläche ein inneres Bauvolumen umgrenzen,in dem:
= die Solarenergie durch eine erste Fläche eingefangen wird
= die durch die erste Fläche durchgedrungenen Strahlungen von einer zweiten Fläche nach selektiver und verstellbarer Weise filtriert werden.
= Auch die Sonnenenergie eingelagert wird, die durch die erste Fläche durchgedrungen ist, aber die von der zweiten Fläche nicht absorbiert worden ist.
= Durch einen Luftumlauf zwischen der erten und zweiten Fläche ,einem Einlagerungssystem und der selektiven Filtrierung der zweiten Fläche werden in Abhängigkeit des benutzen inneren Bauvolumens konstant gehalten.
Das folgende Merkmale besiitzt
· Wasser wird zwischen der ersten und zweiten Fläche zerstäubit, um Wärmeaustausche durch Zustandsänderung des zerstäubten Wassers zu bewirken
· das zwischen der ersten und zweiten Fläche zerstäubte Wasser wirdzwischen diesen Flächen zumindest teilweise verdampft und in dem Einlagerungssystem kondensiert.

2. Verfahren nach dem Anspruch 1 , das folgendes Merkmal besitzt : die Energieeinlagerung liegt in einer solchen Bodentiefe, daß die Zeit , die für ihre Wärmeleitungsausbreitung nötig ist, dem zeitlichen Phasenverlust zwischen der Einlagerungszeit und der gewünschten Wiedergabezeit entspricht.

3. Verfahren nach den Ansprüchen 2 , das folgendes Merkmal besitzt ; man beeinflußt die Energiegeschwindigkeit durch Wärmeleitung und den zeitlichen Phasenverlust durch den Wechsel der Bodenfeuchtigkeit.

4. Anlage für Klimatisierung, Heizung, hygrothermische Regelung und Verarbeitung für Bauwerke, die ein inneres Bauvolumen umgrenzen das aus folgenden Elementen besteht:
= eine erste ,äußere Fläche (12), die die freie Durchstrahlung der Sonnenenergie ermöglicht
= eine zweite Fläche (13), die ein inneres nutzvolumen begrontz und, die die Strahlungen nach selektiver und verstellbarer Weise filtriert und/oder modifiziert
= Leitungsrohze (3), die den Luftumlauf zwischen dem durch die zwei Flächen umschloß enen Raum, dem sonstigen inneren Bauvolumen (10) und den Entwässerungsanlagen (5) ermöglichen
= Temperaturmessfühler (15) für natürliche und erzeugte Temperaturen, Bestrahlungsfühler, Luftfeuchtigkeitsfühler
= ein Energieeinlagerungssystem (2)
Die Anlage ist an folgenden Merkmalen kenntlich :
- Sprühdüsen (19), die das Wasser zwischen der ersten und zweiten Fläche zerstauben und thermischen Austausch durch Zustandsänderung des zerstäubten Wassers bewirken
- Schiebeventile (17)
- Ein Einlagerungssystem das ein natürliches Bodenreservoir (4) umfaßt, worin Entwässerungsanlagen (5) dazu dienen, thermische Austausche zwischen der Luftumwälzung und dem Boden durch Kondensation des in der Luft enthaltenen Wassers und durch Durchfluß vom Kondenswasser in den Boden zu begünstigen
- ein mechanisches Luftumwälzungssystem, um den Luftumlauf und den Luftfeuchtigkeitsgrad zu kontrollieren
- ein Programmierungs-(16) und Regelungssystem, das die Schiebeventile (17) und /oder die Entlüftung (18) und /oder die zweite Fläche (13) nach den von den Sonden (15) angegebenen Werten betätigt.

5. Anlage nach dem Anspruch (5), in der das Bodenvolumen (4) des Einlagerungssystems (2) von seiner Umgebung durch eine Sicherheitshülle (8) isoliert wird.

6. Anlage nach einem der Ansprüche 4 und 5, das folgendes Merkmal besitzt: die Energie wird in so einer Tiefe eingespeichert, daß die für ihre Ausbreitung durch Wärmeleitung nötige Zeit dem zeitlichen Phasenverlust zwischen der Einlagerungszeit und der gewünschten Wiedergabezeit entspricht.

7. Anlage nach einem der Ansprüche 4 bis 6 , die das folgende Merkmal besitzt: die senkrechten Seitenwände der Sicherheitshülle (8) enthalten eine Folge von senkrechten Zylindern 11; jeder Zylinder enthält eine dichte Folie, die mit einer Mischung von aufgequelltem, naturgetrocknetem und stabilisiertem Ton ausgefüllt wird.

8. Anlage nach dem Anspruch 7 , die das folgende Merkmal besitzt : die senkrechten Seitenwänden der Sicherheitshülle (8) bestehen aus einer Folge von Zylindern 1, die versetzt sind.

9. Anlage nach dem Anspruch (10) , die das folgende Merkmal besitzt: die zweite Fläche (13) enthält eine oder mehrere Folien, von denen einige luftdicht und teilweise durchsichtig oder lichtdicht, teilweise zurückstrahlend und/oder die spektrale Strahlungsschichtung modifizierend sind.
